# EUROPÄISCHE PATENTSCHRIFT

(11) **EP 0 608 467 B1**
(45) Veröffentlichungstag und Bekanntmachung des Hinweises auf die Patenterteilung: **28.08.1996**
(21) Anmeldenummer: 93107420.7
(22) Anmeldetag: 07.05.1993
(51) Int. Cl.: B60R 22/32

(54) **Sicherheitsgurtsystem insbesondere für Kraftfahrzeuge**
Safety belt system especially for motor cars
Système de ceinture de sécurité notamment pour automobiles

(30) Priorität: 28.01.1993 DE 4302352
(43) Veröffentlichungstag der Anmeldung: 03.08.1994
(73) Patentinhaber: BUCHNER, Fritz, D-6800 Mannheim (DE)
(72) Erfinder: BUCHNER, Fritz, D-6800 Mannheim (DE)
(74) Vertreter: Geitz, Heinrich, Dr.-Ing.

(56) Entgegenhaltungen:
- CH-A- 603 176
- DE-A- 2 841 404
- DE-A- 3 443 205
- DE-A- 3 615 124
- DE-U- 8 223 436

## Beschreibung

Die Erfindung bezieht sich auf ein insbesondere für Kraftfahrzeuge bestimmtes, aber nicht auf diesen Anwendungsbereich beschränktes Sicherheitsgurtsystem mit einem Personenrückhaltegurt, der mit wenigstens einem Ende am Fahrzeug befestigt bzw. mittels eines Gurtspanners gehalten sowie mit einer lösbar in ein fahrzeugfest angeordnetes Gurtschloß einkuppelbaren Gurtschnalle versehen ist, und mit einer auf einem Gurtabschnitt infolge Klemmung fest angeordneten Schneideinrichtung zum wahlweisen Durchtrennen des Gurtes, die einen Gurtaufnahmeschlitz mit einem Klemmabschnitt zum zumindest abschnittsweisen Einklemmen eines sich durch den Gurtaufnahmeschlitz hindurcherstreckenden Gurtes aufweist.

Sicherheitsgurtsysteme dieser Art und Zweckbestimmung sind allgemein bekannt. Insbesondere in Kraftfahrzeugen sind sogenannte Dreipunktgurte bereits millionenfach eingesetzt worden, deren eines Ende auf einem bei abrupten Beschleunigungsänderungen sperrenden Gurtspanner aufgenommen und deren anderes Ende zum Beispiel im unteren Bereich einer Mittelsäule zwischen den vorderen und hinteren Fahrzeugtüren befestigt ist, während eine in ein Gurtschloß einkuppelbare Gurtschnalle längsbeweglich auf dem Gurt aufgenommen ist.

Da derartige Sicherheitsgurtsysteme, die sich vielfach bewährt haben, zu tückischen Fallen werden und beispielsweise bei stark beschädigten Fahrgastzellen kollidierter Fahrzeuge die Fahrgäste am Verlassen des Fahrgastraums hindern können, sind auch schon infolge Klemmung auf Abschnitten derartiger Gurte fest angeordnete Schneideinrichtungen zum Durchtrennen der Rückhaltegurte vorgeschlagen worden.

So ist aus der gattungsbildenden DE-OS 28 41 404 ein "Sicherheitsgurt-Durchtrenngerät für Kraftfahrzeuge" bekannt, das zwischen einem Oberteil und einem Unterteil einen Gurtaufnahmeschlitz sowie ein quer zur Längserstreckung eines sich durch diesen Gurtaufnahmeschlitz hindurcherstreckenden Gurtes geführtes Schneidemesser besitzt. Auf einer Seite der Führung für das Schneidemesser ist der Gurtaufnahmeschlitz als Klemmabschnitt ausgebildet, der bei ordnungsgemäßer Montage einen Gurtabschnitt zumindest abschnittsweise fest einklemmt und dadurch ein unerwünschtes Verschieben des Gerätes auf dem Gurt verhindert.

Ein als "Gurtkapper" bezeichnetes Gerät ganz ähnlicher Art und gleicher Zweckbestimmung ist auch aus dem DE-Gebrauchsmuster 82 23 436 bekannt, bei dem ebenfalls der auf einer Seite einer Messerführung liegende Teil eines Gurtaufnahmeschlitzes als Klemmabschnitt ausgebildet ist, während auf der anderen Seite der Messerführung der Gurtaufnahmeschlitz einen sich durch letzteren hindurcherstreckenden Gurt mit Spiel aufnimmt.

Die vorbekannten Schneideinrichtungen sind angesichts der abschnittsweisen Ausbildung der Gurtaufnahmeschlitze als Klemmabschnitte auf einem Sicherheitsgurt verschiebungssicher festlegbar. Demgemäß können derartige Schneideinrichtungen in einfacher Weise an vorzugsweise zugänglichen Stellen der Gurte angebracht werden. Bei Sicherheitsgurten für Kraftfahrzeuge empfiehlt sich die Anbringung zwischen dem am Kraftfahrzeug festgelegten einen Gurtende und der Gurtschnalle in einem Bereich, der bei angelegtem Gurt etwa am Oberschenkel einer durch den Gurt gesicherten Person zu liegen kommt.

Angesichts der verschiebungssicheren Festlegung der Schneideinrichtung auf dem Gurt infolge Klemmung im Bereich des auf einer Seite der Messerführung angeordneten Klemmabschnittes muß die Schneideinrichtung so auf den Gurt montiert werden, daß der Klemmabschnitt zu dem am Fahrzeug befestigten Gurtende hinweist und im Falle des Durchtrennens des Gurtes der auf der anderen Seite der Messerführung aufgenommene Gurt dann ungehindert aus dem Gurtaufnahmeschlitz herausgleiten kann. Wenn hingegen die Schneideinrichtung fehlerhaft in der Weise auf dem Gurt montiert ist, daß der Klemmabschnitt zur Gurtschnalle hinweist, vermag lediglich der fest am Fahrzeug befestigte Teil des Gurtes aus dem Gurtaufnahmeschlitz herauszugleiten, während die Schneideinrichtung angesichts der Klemmhalterung im Bereich des Klemmabschnittes fest mit dem anderen Gurtteil verbunden bleibt. Demgemäß vermag der durchtrennte Gurt nur bis zum Auftreffen der Schneideinrichtung auf die Gurtschnalle durch letztere hindurchzugleiten, gibt aber dabei die durch den Gurt gesicherte Person nicht frei.

Ferner hat sich die Handhabbarkeit der vorbekannten Schneideinrichtungen insofern als unzulänglich erwiesen, als die in Querführungen aufgenommenen Schneidemesser mittels seitlich von der jeweiligen Schneideinrichtung vorstehender Ösen durch ziehende Bewegung betätigt werden müssen, nachdem zuvor quer zur Führungsrichtung formschlüssig mit den Führungsmitteln der Schneidemesser zusammenwirkende Sicherungsmittel entfernt worden sind. Es hat sich gezeigt, daß derartige Sicherungsmittel bei stark beschädigten Fahrgastzellen nur schwer entfernbar sind und dadurch das schnelle Bergen von Insassen verunfallter Fahrzeuge erschwert ist. Angesichts der immer bestehenden Brandgefahr bei Fahrzeugkollisionen kann das schnelle Bergen der Insassen jedoch überlebenswichtig sein.

Durch die Erfindung soll daher das eingangs erläuterte Sicherheitsgurtsystem mit einer auf einem Gurtabschnitt fest aufgenommenen Schneideinrichtung dahingehend verbessert werden, daß im Bedarfsfalle ein schnelles und sicheres Durchtrennen des Gurtes auf der zur Gurtschnalle hinweisenden Seite der Schneideinrichtung gelingt und mithin ein durchtrennter Gurt aus der Gurtschnalle ungehindert herausgleiten kann.

Gelöst ist diese Aufgabe dadurch, daß bei dem Sicherheitsgurtsystem nach dem Oberbegriff des Patentanspruchs 1 als Mittel zum Durchtrennen des Gurtes die Schneideinrichtung mit zwei in Richtung der Gurtlängserstreckung beabstandet voneinander angeordneten, gemeinsam quer zur Gurtlängsrichtung betätigbaren Schneidemessern versehen ist und daß sich der Klemmabschnitt zwischen den beiden Schneidemessern befindet.

Bei der Erfindung handelt es sich somit darum, daß im Falle einer Betätigung der Schneideinrichtung der infolge Klemmung im Bereich des Klemmabschnittes gehaltene Gurt beidendig vom Klemmabschnitt durchtrennbar ist mit der Folge, daß die zuvor fest auf dem Gurt aufgenommene Schneideinrichtung vollständig aus dem Gurt herausgeschnitten wird und beide abgetrennten Gurtenden aus dem Gurtaufnahmeschlitz herausgleiten können. Ein vom unzertrennten Personenrückhaltegurt gehaltener Fahrgast ist mithin nach dem Durchtrennen des Gurtes vollständig freigegeben und kann sich danach aus dem Fahrgastraum entfernen bzw. durch Hilfspersonen in Sicherheit gebracht werden.

Eine sinnvolle Weiterbildung der Erfindung sieht vor, daß die Schneidemesser der Schneideinrichtung einem quer zur Längserstreckung des Gurtaufnahmeschlitzes bewegbar geführten Schieber zugeordnet sind, der normalerweise in einer seitlichen Stellung mit nicht am Gurt angreifenden Schneidemessern gehalten, gegen die Wirkung einer Haltekraft aber zum Zwecke des Durchtrennens des Gurtes quer zur Längserstreckung der von dem Gurtaufnahmeschlitz gebildeten Gurtführung betätigbar ist.

Ein besonders sicheres und wirksames Durchtrennen des Gurtes ist dann gewährleistet, wenn nach einem nochmaligen Weiterbildungsmerkmal die vom Schieber entfernten Enden der Schneidemesser in Führungsrillen eingreifen, die auf der von der Schieberführung entfernten Seite des Gurtaufnahmeschlitzes quer zu dessen Längserstreckung verlaufend angeordnet sind.

Bei dem erfindungsgemäßen Sicherheitsgurtsystem kann die Schneideinrichtung mit Vorteil aus je einem Oberteil mit der Schieberführung und einem mit letzterem verbundenen Unterteil bestehen, zwischen denen sich der Gurtaufnahmeschlitz mit dem Klemmabschnitt erstreckt, in dem der durch den Gurtaufnahmeschlitz hindurchgeführte Gurtabschnitt unter Klemmung aufgenommen ist.

Diese Ausführungsform der Erfindung kann auch durch die Ausbildung des Ober- und Unterteils als im wesentlichen deckungsgleiche Kunststoff-Spritzgießteile gekennzeichnet sein, die in der - zusammengeklappten - Montagelage unter Ausbildung des Gurtaufnahmeschlitzes fest miteinander verbunden sind, etwa mittels geeigneter Verbindungsschrauben. Dabei können das Unter- und Oberteil über ein angespitztes Scharnier miteinander verbunden sein. Eine derartige Ausbildung des Ober- und Unterteils hat sich als besonders vorteilhaft und kostengünstig sowie montagefreundlich erwiesen.

Weiter kann die Schneideinrichtung des erfindungsgemäßen Sicherheitsgurtsystems mit einem Sicherungsdeckel versehen sein, der den Schieber im Bereich der quer zur Längserstreckung des Gurtaufnahmeschlitzes verlaufenden Schieberführung abdeckt und mittels einer clipartig wirkenden Arretierung in seiner Sicherungslage gehalten, bei Überwindung der Arretierung jedoch in eine den Schieber freigebende Stellung verschwenkbar ist.

Mittels des Sicherungsdeckels, der vorzugsweise um eine parallel zum Gurtaufnahmeschlitz in Richtung der Gurtlängserstreckung verlaufendende Achse an der Schneideinrichtung verschwenkbar angelenkt sein kann, ist mithin ein zufälliges und unerwünschtes Betätigen des Schiebers und damit der Schneidemesser zum Durchtrennen des Gurtes wirksam unterbunden. Insbesondere ist dies der Fall, wenn der Sicherungsdeckel mit einem Sperrnocken versehen ist, der in der Sicherungsstellung den Schieber gegen eine Schneidbetätigung formschlüssig blockiert, in der Entriegelungsstellung hingegen freigibt.

Die Cliparretierung des Sicherungsdeckels kann dabei den Sperrnocken in Form federgestützter Verrastungskugeln zugeordnet sein, die seitlich über den Sperrnocken vorstehen und in der Arretierungslage in Rasten im Bereich der Schieberführung eingreifen.

Nach einem anderen Ausgestaltungsmerkmal der Erfindung kann der Sicherungsdeckel aber auch um eine rechtwinklig zum Gurtaufnahmeschlitz und zur Gurtlängserstreckung verlaufende Achse verschwenkbar am Gehäuse der Schneideinrichtung angelenkt und darüber hinaus so ausgebildet sein, daß in der die Schieberführung abdeckenden Sicherungslage eine als Anschlag für den Schieber wirkende Stirnkante des Sicherungsdeckels im Verschiebewege des mit den Schneidmessern ausgerüsteten Schiebers steht.

Bei der zuletzt erörterten Ausbildung der Schneideinrichtung ist der Sicherungsdeckel mithin in Richtung der Gurtlängserstreckung in eine den Schieber zur Betätigung freigebende Stellung verschwenkbar. Dadurch ist eine gegenüber der ersten Ausführungsform verbesserte Handhabbarkeit gewährleistet.

Anhand der beigefügten Zeichnung sollen nachstehend zwei Ausführungsformen der Erfindung erläutert werden. In schematischen Ansichten zeigen:
- Fig. 1: in einer Draufsicht einen Gurtabschnitt mit einer auf diesem fest angeordneten Schneideinrichtung, die zwei in Gurtlängsrichtung beabstandet voneinander einem querbeweglichen Schieber zugeordnete Schneidemesser sowie einen zwischen diesen Schneidemessern angeordneten Klemmabschnitt besitzt,
- Fig. 2: die auf dem Gurtabschnitt aufgenommene Schneideinrichtung mit einem hochgeklappten Sicherungsdeckel in einer der Schnittlinie II-II in Fig. 1 entsprechenden Querschnittansicht,
- Fig. 3: die auf dem Gurtabschnitt aufgenommene Schneideinrichtung in einem der Schnittlinie III - III in Fig. 1 entsprechenden Längsschnitt bei Weglassung des Sicherungsdeckels, und mit bis über die Schnittlinie vorgeschobenem Schieber mit den Schneidemessern,
- Fig. 4: in einer Ansicht wie in Fig. 1 einen Gurtabschnitt mit einer auf diesem fest aufgenommenen Schneideinrichtung, die abweichend von der ersten Ausführungsform ausgebildet ist, und
- Fig. 5: in einer der Schnittlinie V-V in Fig. 4 entsprechenden Schnittansicht die zweite Ausführungsform der Schneideinrichtung.

Bei dem in der Zeichnung veranschaulichten Sicherheitsgurtsystem handelt es sich um ein heute bei Kraftfahrzeugen allgemein bekanntes und gebräuchliches Dreipunktgurtsystem mit einem Haltegurt, der mit seinem jeweils einen Ende auf einem an geeigneter Stelle in einem Fahrzeug angeordneten Gurtspanner aufgenommen und mit dem anderen Gurtende an einem Fixpunkt im Fahrzeug festgelegt ist. Im Bereich zwischen dem Gurtspanner und der Festlegung des einen Gurtendes ist eine längsbeweglich auf dem Gurt aufgenommene Gurtschnalle angeordnet, die wahlweise mit einem fahrzeugfesten Gurtschloß kuppelbar ist.

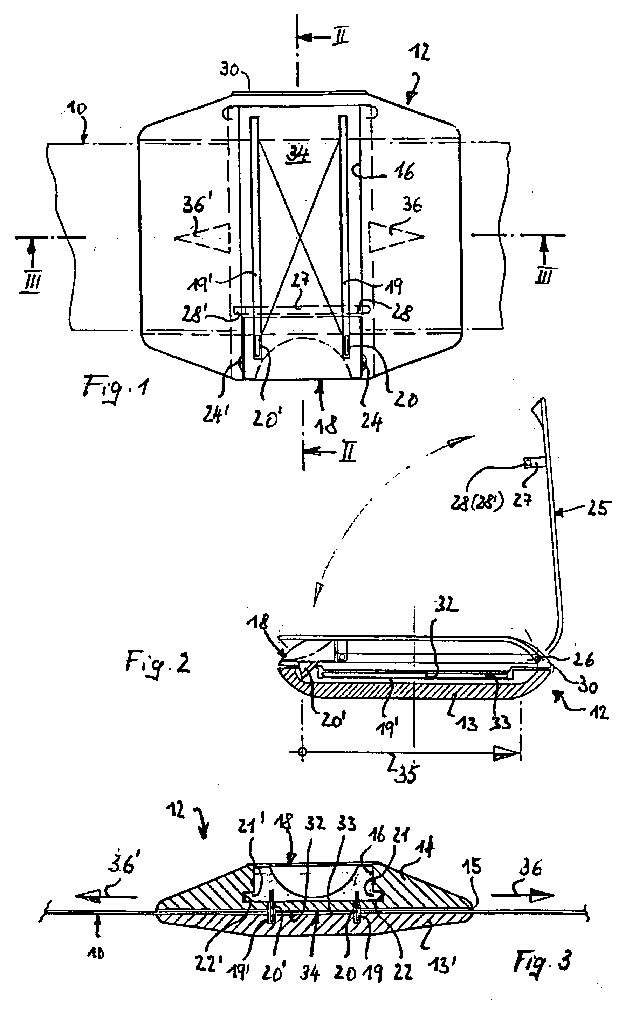

In den Fig. 1 bis 3 bzw. den Fig. 4 oder 5 ist jeweils nur ein Gurtabschnitt mit je einer nachstehend noch im einzelnen zu beschreibende Schneideinrichtung zum Durchtrennen des Gurtes, wenn der Gurt wegen mangelnder Zugänglichkeit des Gurtschlosses oder wegen dessen Beschädigung durch Entkuppeln der Gurtschnalle nicht mehr geöffnet werden kann, dargestellt.

Bei der in den Fig. 1 bis 3 veranschaulichten Ausführungsform besteht die auf einem Abschnitt eines Personenrückhaltegurtes 10 aufgenommene Schneideinrichtung 12 im wesentlichen aus einem Unterteil 13 und einem deckungsgleich darauf befestigten Oberteil 14 mit einem sich zwischen dem Unterteil und Oberteil erstreckenden Gurtaufnahmeschlitz 15, in dem der Gurt aufgenommen ist. Im Oberteil ist in einer Querausnehmung 16 ein Schieber 18 mit zwei in Richtung der Längserstreckung des Gurtaufnahmeschlitzes beabstandet voneinander angeordneten und jeweils in untere Führungsrillen 19, 19', die sich im Unterteil 13 erstrecken, eingreifenden Schneidemessern 20, 20' querbeweglich geführt. Der Schieber 18 besitzt seitlich vorstehende Führungsflansche 21, 21', die in sich längs der den Schieber aufnehmenden Querausnehmung 16 im Oberteil erstreckende Führungsnuten 22, 22' eingreifen.

In den Fig. 1 und 2 steht der Schieber 18 mit den Schneidemessern 20, 20' in einer Stellung seitlich von dem im Gurtaufnahmeschlitz 15 aufgenommenen Gurtabschnitt. Der Schieber ist mit einer bei 24, 24' angedeuteten clipartigen Arretierung in dieser Nichtgebrauchsstellung gehalten und oberseitig von einem Sicherungsdeckel 25 abgedeckt, der um eine auf der von der Schieberstellung in Fig. 1 entfernten Seite im Oberteil 14 angeordnete Anlenkachse 26 in die an Fig. 2 ersichtliche Lage hochschwenkbar angelenkt ist. Dieser Sicherungsdeckel besitzt einen Haltenocken 27, der in der Sicherungsstellung auf der zur Deckelanlenkung hinweisenden Seite vor dem Schieber 18 mit den Schneidemessern 20, 20' steht und dadurch in dieser Stellung die Schneidemesser 20, 20' in der durch die erwähnten Verrastungen 24, 24' ohnehin gesicherten Stellung blockiert. Der Sicherungsdeckel 25 ist in seiner Schließlage mittels clipartig wirkender Verrastungen 28, 28' gehalten, die seitlich von dem den Schieber 18 mit den Schneidemessern 20, 20' in der Sicherungsstellung blockierenden Sicherungsnocken 27 vorstehen und in entsprechenden Verrastungsausnehmungen der Querführung 16 des Schiebers aufgenommen sind.

Das Unterteil 13 und das Oberteil 14 der Schneideinrichtung 12 sind als über ein Scharnier 30 miteinander verbundene Kunststoff-Spritzteile im wesentlichen deckungsgleich ausgeführt. Nach der Montage des Schiebers 18 mit den Schneidemessern 20, 20' wird die Schneideinrichtung in der Weise montiert, daß nach dem Einlegen des Gurtabschnittes in einen sich in Längsrichtung des Unterteils erstreckenden Führungsbereich das Oberteil 14 um das Scharnier 30 in eine deckungsgleiche Lage auf das Unterteil geklappt wird, worauf Oberteil und Unterteil mittels nicht gezeigter Halteschrauben in bekannter Weise fest miteinander verbunden werden.

Die seitlichen Ränder des Unter- und Oberteils sind gegenüber einer im zusammengeklappten Zustand den Gurtaufnahmeschlitz 15 bildenden Gurtführung erhöht. Zwischen den Schneidemessern 20, 21' ist ein aus einer Klemmplatte 32 im Oberteil 14 und einer Gegendruckplatte 33 im Unterteil bestehender Klemmabschnitt 34 vorgesehen, zwischen dem beim Verschrauben des Unter- und Oberteils der Schneideinrichtung der aufgenommene Gurtabschnitt fest eingeklemmt wird und dadurch die Schneideinrichtung 12 auf dem Gurt fest aufgenommen ist. Die sich jeweils auf der vom Klemmabschnitt abgewandten Seite der Schneidemesser 20, 20' erstreckenden Teile des Gurtaufnahmeschlitzes 15 nehmen hingegen den sich durch die Schneideinrichtung hindurcherstreckenden Gurt mit Spiel auf.

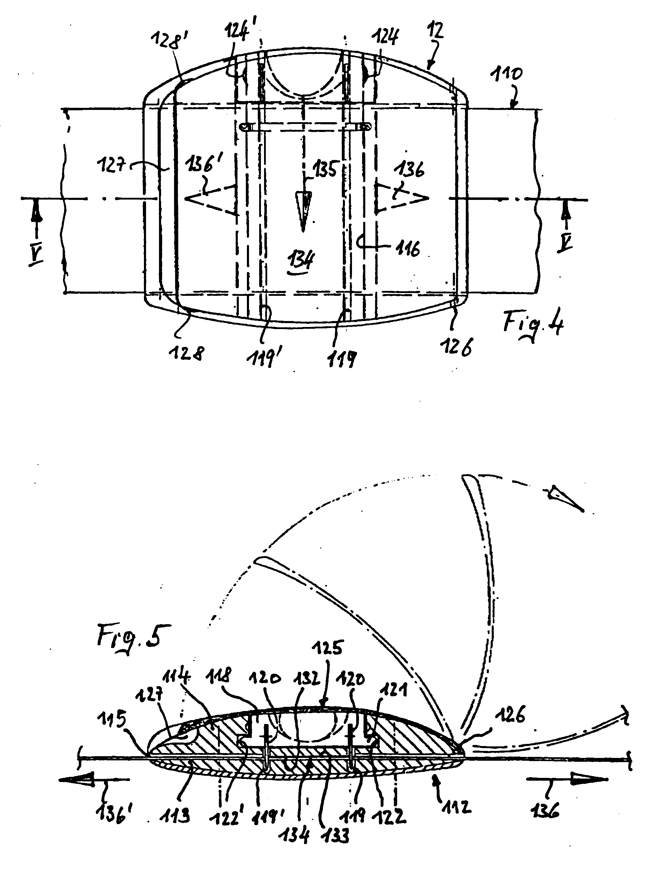

Bei der in Fig. 4 und 5 veranschaulichten Ausführungsform sind für gleiche Teile in den Fig. 1 bis 3 die gleichen Bezugszeichen verwendet worden, zur Unterscheidung jedoch um 100 erhöht.

Diese Ausführungsform unterscheidet sich von der Ausführungsform nach den Fig. 1 bis 3 hauptsächlich dadurch, daß der Sicherungsdeckel 125 um eine sich rechtwinklig zum Gurtaufnahmeschlitz 115 erstreckende Anlenkachse 126 aus seiner Sicherungsstellung in eine den Schieber 118 zur Schneidbetätigung gemäß Pfeil 135 freigebende Stellung hochschwenkbar ist. Die Anlenkachse 126 ist am Anfang des Gurtaufnahmeschlitzes 115 auf einer Seite des Oberteils 114 angeordnet. In Fig. 5 sind in strichpunktierten Linien verschiedene Öffnungsstellungen des Sicherungsdeckels angedeutet.

Wie insbesondere Fig. 4 zeigt, erstreckt sich der Sicherungsdeckel 125 nach Länge und Breite im wesentlichen über das gesamte Oberteil 114. Das von der Anlenkachse 126 entfernte Ende des Sicherungsdeckels liegt im Bereich einer im Oberteil 114 angeordneten Griffmulde 127, die im Bedarfsfalle ein leichtes Erfassen der Deckelkante und damit ein einfaches Hochschwenken des Sicherungsdeckels in seine den Schieber 118 zur Betätigung freigebende Stellung ermöglicht. Das Oberteil ist auf beiden Längsseiten mit einem hochstehenden Rand versehen, zwischen dem der Sicherungsdeckel in seiner Sicherungsstellung aufgenommen ist. Gehalten wird der Sicherungsdeckel in der Sicherungsstellung durch klipartige Verrastungen 128, 128', die beidseitig an dem von der Anlenkachse 126 entfernten Ende angeordnet sind und mit entsprechenden Rastausnehmungen in den hochstehenden Rändern des Oberteils 114 zusammenwirken.

Wie bei der ersten Ausführungsform bildet eine sich quer zum Gurtaufnahmeschlitz 115 im Oberteil erstreckende Querausnehmung 116 die Schieberführung. Auf derjenigen Seite der Schneideinrichtung, auf der in der Nichtbetätigungsstellung der Schieber steht, ist der Rand des Oberteils durchbrochen und der Schieber besitzt eine entsprechend verlaufende Kante, die bei nichtbetätigtem Schieber und in Sicherungsstellung befindlichem Sicherungsdeckel 125 an der entsprechenden Stirnkante des Sicherungsdeckels anliegt. Der Schieber ist somit bei in Sicherungsstellung befindlichem Sicherungsdeckel neben seiner durch die Rasten 124, 124' vermittelten Halterung durch das Anliegen dieser nach oben vorspringenden Kante an der entsprechenden Stirnkante des Sicherungsdeckels formschlüssig in seiner Nichtbetätigungsstellung gesichert und nur nach vorherigem Hochschwenken des Sicherungsdeckels, wie dies in strichpunktierten Linien in Fig. 5 angedeutet ist, betätigbar.

Bei der Verwendung der Schneideinrichtung 12, 112 bei Sicherheitsgurtsystemen in Kraftfahrzeugen ist die Schneideinrichtung zweckmäßigerweise so auf dem Gurt 10, 110 anzuordnen, daß sie bei angelegtem Gurt auf der zur Fahrzeugtür hinweisenden Seite im Beckenbereich des jeweiligen Fahrzeugbenutzers liegt. Dadurch ist sichergestellt, daß bei Nichtzugänglichkeit des in der Regel zwischen benachbarten Fahrzeugsitzen angeordneten Gurtschlosses die Schneideinrichtung unmittelbar nach dem Öffnen einer Fahrzeugtür im Zugriffsbereich des Fahrzeuginsassen selbst oder von Helfern liegt. Die Nichtzugänglichkeit des Gurtschlosses kann beispielsweise auf unfallbedingter Beschädigung des Fahrgastraumes beruhen.

Zur Betätigung der Schneideinrichtung 12, 112 bedarf es lediglich des Hochschwenkens des mittels der clipartigen Arretierung 28, 28'; 128, 128' in seiner Sicherungsstellung gehaltenen Sicherungsdeckels 25, 125 und des nachfolgenden Betätigens des Schiebers 18, 118 mit den Schneidemessern 20, 20'; 120, 120' längs der Schieberführung 16, 116. Bei dieser Bewegung der Schneidemesser, die der Pfeil 35 in Fig. 2 bzw. der Pfeil 135 in Fig. 4 andeutet, wird der innerhalb der Schneideinrichtung zwischen den Schneidemessern eingeklemmte Gurt 10, 110 beidseitig des Klemmabschnitts 34, 134 durchtrennt mit der Folge, daß die auf den vom Klemmabschnitt abgewandten Seiten der Messer 20, 20' bzw. 120, 120' im Bereich des Gurtaufnahmeschlitzes 15, 115 mit Spiel aufgenommenen Gurtabschnitte aus dem Gurtaufnahmeschlitz frei herausgleiten, wie die Pfeile 36, 36' bzw. 136, 136' andeuten, und dadurch die Gurthalterung gelöst ist.

Bei der Betätigung der Schneideinrichtung 12, 112 findet somit ein Durchtrennen des Gurtes beidseitig des eingeklemmten Gurtabschnittes statt. Die Schneideinrichtung wird dabei vollständig aus dem Gurt herausgeschnitten und die beiden dann abgetrennten Gurtabschnitte gleiten aus den sich auf den jeweils vom Klemmabschnitt 34, 134 entfernten Seiten der Schneidemesser 20, 20' bzw. 120, 120' erstreckenden Teilen des Gurtaufnahmeschlitzes heraus.

## Patentansprüche

1. Insbesondere für Kraftfahrzeuge bestimmtes Sicherheitsgurtsystem mit einem Personenrückhaltegurt (10, 110), der mit wenigstens einem Ende am Fahrzeug befestigt bzw. mittels eines Gurtspanners gehalten sowie mit einer lösbar in ein fahrzeugfest angeordnetes Gurtschloß einkuppelbaren Gurtschnalle versehen ist, und mit einer auf einem Gurtabschnitt infolge Klemmung fest angeordneten Schneideinrichtung (12, 112) zum wahlweisen Durchtrennen des Gurtes (10, 110), die einen Gurtaufnahmeschlitz (15, 115') mit einem Klemmabschnitt (34, 134) zum zumindest abschnittsweisen Einklemmen eines sich durch den Gurtaufnahmeschlitz (15, 115') hindurcherstreckenden Gurtes (10, 110) aufweist,
dadurch gekennzeichnet,
daß die Schneideinrichtung (12, 112) als Mittel zum Durchtrennen des Gurtes (10, 110)·mit zwei in Richtung der Gurtlängserstreckung beabstandet voneinander angeordneten, gemeinsam quer zur Gurtlängsrichtung betätigbaren Schneidemessern (20, 20', 120, 120') versehen ist und daß sich der Klemmabschnitt (34, 134) zwischen den beiden Schneidemessern befindet.

2. Sicherheitsgurtsystem nach Anspruch 1, dadurch gekennzeichnet, daß die Schneidemesser (20, 20', 120, 120') einem quer zur Längserstreckung des Gurtaufnahmeschlitzes (15, 115') bewegbar geführten Schieber (18, 118') zugeordnet sind.

3. Sicherheitsgurtsystem nach Anspruch 2, dadurch gekennzeichnet, daß der Schieber (18, 118) mit den Schneidemessern (20, 20', 120, 120') in einer Position seitlich von dem im Gurtaufnahmeschlitz (15, 115) aufgenommenen Gurtabschnitt kraftschlüssig gehalten ist.

4. Sicherheitsgurtsystem nach Anspruch 2 oder 3, dadurch gekennzeichnet, daß die vom Schieber (18, 118) entfernten Enden der Schneidemesser (20, 20', 120, 120') in Führungsrillen (19, 19', 119, 119') eingreifen, die auf der von der Schieberführung entfernten Seite des Gurtaufnahmeschlitzes (15, 115') quer zu dessen Längserstreckung verlaufend angeordnet sind.

5. Sicherheitsgurtsystem nach einem der Ansprüche 2 bis 4, dadurch gekennzeichnet, daß die Schneideinrichtung (12, 112) aus je einem Oberteil (14, 114) mit dem in einer Führung bewegbar aufgenommenen Schieber (18, 18', 118, 118') und einem mit dem Oberteil verbundenen Unterteil (13, 13') besteht, wobei sich zwischen dem Oberteil und dem Unterteil der Gurtaufnahmeschlitz (15, 115) mit dem Klemmabschnitt (34, 134) erstreckt.

6. Sicherheitsgurtsystem nach Anspruch 5, gekennzeichnet durch die Ausbildung des Unter- und Oberteils (13, 14, 113, 114) als im wesentlichen deckungsgleiche Kunststoff-Spritzgießteile, die in der Montagelage unter Ausbildung des Gurtaufnahmeschlitzes (15, 115) fest miteinander verbunden sind, etwa verschraubt.

7. Sicherheitsgurtsystem nach Anspruch 6, gekennzeichnet durch die Verbindung des Unterteils (13) mit dem Überteil (14) über ein angespitzes Scharnier (30).

8. Sicherheitsgurtsystem nach einem der Ansprüche 2 bis 7, dadurch gekennzeichnet, daß die Schneideinrichtung (12, 112) einen Sicherungsdeckel (25, 125) besitzt, der den Schieber (18, 118) im Bereich der quer zur Längserstreckung des Gurtaufnahmeschlitzes (15, 115) verlaufenden Schieberführung (16, 116) abdeckt und mittels einer clipartig wirkenden Arretierung (28, 28', 128, 128') in seiner Sicherungslage gehalten, bei Überwindung der Arretierung jedoch in eine den Schieber freigebende Stellung verschwenkbar ist.

9. Sicherungsgurtsystem nach Anspruch 8, dadurch gekennzeichnet, daß der Sicherungsdeckel (25) mit einem Sperrnocken (27) versehen ist, der in der Sicherungsstellung den Schieber (18, 18') gegen eine Schneidbetätigung formschlüssig blockiert, in der Entriegelungsstellung hingegen freigibt.

10. Sicherheitsgurtsystem nach Anspruch 9, dadurch gekennzeichnet, daß der Sicherungsdeckel (25) um eine parallel zum Gurtaufnahmeschlitz (15) um eine in Richtung der Gurtlängserstreckung verlaufende Achse (26) an der Schneideinrichtung (12) verschwenkbar angelenkt ist.

11. Sicherungsgurtsystem nach Anspruch 9 oder 10, dadurch gekennzeichnet, daß die clipartig wirkende Arretierung dem Sperrnocken (27) in Form federabgestützter Verrastungskugeln (28, 28') zugeordnet ist, die seitlich über den Sperrnocken vorstehen und in der Arretierungslage in Rasten im Bereich der Schieberführung eingreifen.

12. Sicherheitsgurtsystem nach Anspruch 8, dadurch gekennzeichent, daß der Sicherungsdeckel (125) um eine rechtwinklig zum Gurtaufnahmeschlitz (115) und zur Gurtlängserstreckung verlaufende Achse (126) verschwenkbar am Gehäuse der Schneideinrichtung (112) angelenkt ist.

13. Sicherheitsgurtsystem nach Anspruch 11, dadurch gekennzeichnet, daß der Sicherungsdeckel (125) in der die Schieberführung (116) abdeckenden Sicherungslage mit einer als Anschlag für den Schieber (118) wirkenden Stirnkante im Verschiebewege des mit den Schneidemessern (120, 120') ausgerüsteten Schiebers steht.

## Claims

1. Safety belt system, which is intended in particular for motor vehicles, with a passenger-retaining belt (10, 110), which by at least one end is fastened at the vehicle or retained by means of a belt tensioner as well as provided with a belt buckle detachably couplable into a belt fastener arranged fast with the vehicle, and with a cutting equipment (12, 112), which is firmly arranged on a belt portion in consequence of clamping, for the selectable severing of the belt (10, 110), and which displays a belt-receiving slot (15, 115') with a clamping portion (34, 134) for the at least portionwise clamping-in of a belt (10, 110) extending through the belt-receiving slot (15, 115'), characterised thereby, that the cutting equipment (12, 112) as means for the severing of the belt (10, 110) is provided with two cutting blades (20, 20', 120, 120'), which are arranged each at a spacing from the other in the direction of the longitudinal extent of the belt and actuable in common transversely to the longitudal direction of the belt, and that the clamping portion (34, 134) is disposed between both the cutting blades.

2. Safety belt system according to claim 1, characterised thereby, that the cutting blades (20, 20', 120, 120') are associated with a slider (18, 118), which is guided to be movable transversely to the longitudinal extent of the belt-receiving slot (15, 115').

3. Safety belt system according to claim 2, characterised thereby, that the slider (18, 118) with the cutting blades (20, 20', 120, 120') is force-lockingly retained in a position lateral of the belt portion received in the belt-receiving slot (15, 115').

4. Safety belt system according to claim 2 or 3, characterised thereby, that those ends of the cutting blades (20, 20', 120, 120'), which are remote from the slider (18, 118), engage into guide grooves (19, 19', 119, 119'), which are arranged to extend on that side of the belt-receiving slot (15, 115'), which is remote from the slider glide, and transversely to the longitudinal extent of the belt-receiving slot (15, 115').

5. Safety belt system according to one of the claims 2 to 4, characterised thereby, that the cutting equipment (12, 112) consists each time of a respective upper part (14, 114) with the slider (18, 18', 118, 118'), which is received to be movable in a guide, and of a lower part (13, 13') respectively connected with each upper part, wherein the belt-receiving slot (15, 115') with the clamping portion (34, 134) extends between the upper part and the lower part.

6. Safety belt system according to claim 5, characterised by the formation of the upper and lower parts (13, 14, 113, 114) as substantially congruent injection-moulded synthetic material parts which in the assembled position are firmly connected, possibly screwed, together whilst forming the belt-receiving slot (15, 115').

7. Safety belt system according to claim 6, characterised by, the connection of the lower part (13) with the upper part (14) by way of a pointed hinge (30).

8. Safety belt system according to one of the claims 2 to 7, characterised thereby, that the cutting equipment (12, 112) has a securing lid (25, 125), which covers the slider (18, 118) in the region of the slider guide (16, 116) extending transversely to the longitudinal extent of the belt-receiving slot (15, 115') and is retained in its securing position by means of an arresting device (28, 28', 128, 128') acting in the manner of a clip, however on overcoming the arresting device is pivotable into a setting, in which the slider is released.

9. Safety belt system according to claim 8, characterised thereby, that the securing lid (25) is provided with a blocking cam (27), which in the securing position shape-lockingly blocks the slider (18, 118) against a cutting actuation, thereagainst releases it in the unlatching position.

10. Safety belt system according to claim 9, characterised thereby, that the securing lid (25) is articulated at the cutting equipment (12) to be pivotable about an axle (26) extending in the direction of the longitudinal extent of the belt and parallelly to the belt-receiving slot (15).

11. Safety belt system according to claim 9 or 10, characterised thereby, that the arresting device acting in the manner of a clip is associated with the blocking cam (27) in the shape of spring-supported detent balls (28, 28'), which project laterally beyond the blocking cam and in the arresting position engage into detents in the region of the slider guide.

12. Safety belt system according to claim 8, characterised thereby, that the securing lid (125) is articulated at the housing of the cutting equipment (112) to be pivotable about an axle (126) extending at right angles to the belt-receiving slot (115) and to the longitudinal extent of the belt.

13. Safety belt system according to claim 11, characterised thereby, that the securing lid (125) in the securing position covering the slider guide (116) stands by an end edge, which acts as abutment for the slider (118), in the displacement path of the slider equipped with the cutting blades (120, 120').

## Revendications

1. Système de ceinture de sécurité, destiné en, particulier à des véhicules à moteur, comportant une ceinture de retenue d'une personne (10, 110) qui par au moins une extrémité est fixée au véhicule ou encore est maintenue à l'aide d'un tendeur de ceinture, et est pourvue d'une boucle de ceinture, pouvant être introduite en accouplement dans une attache de ceinture solidaire du véhicule, et comportant un dispositif de coupe (12, 112) fixé à demeure à un tronçon de la ceinture en conséquence d'un serrage, pour permettre de découper la ceinture (10, 110) à volonté, dispositif qui comporte une fente (15, 115'), destinée à loger la ceinture, comportant un tronçon de serrage (34, 134) pour insérer, au moins par tronçons, une ceinture (10, 110) passant à travers la fente (15, 115') destinée à loger la ceinture, caractérisé en ce que le dispositif de coupe (12, 112) est, comme moyen pour découper la ceinture (10, 110), pourvu de deux lames de coupe (20, 20', 120, 120'), disposée à une certaine distance l'une de l'autre dans le sens longitudinal de la ceinture et pouvant être manoeuvrées d'une manière simultanée perpendiculairement au sens longitudinal de la ceinture, et en ce que le tronçon de serrage (34, 134) se trouve entre les deux lames de coupe.

2. Système de ceinture de sécurité selon la revendication 1, caractérisé en ce que les lames de coupe (20, 20', 120, 120') sont affectées à une coulisse (18, 18'), guidée de façon a pouvoir se déplacer transversalement à l'étendue longitudinale de la fente (15, 115') destinée à loger la ceinture.

3. Système de ceinture de sécurité selon la revendication 2, caractérisé en ce que la coulisse (18, 118) est maintenue,selon une liaison dynamique, grâce aux lames de coupe (20, 20', 120, 120'), dans une position latérale par rapport au tronçon de ceinture logé dans la fente (15, 115) destinée à loger la ceinture.

4. Système de ceinture de sécurité selon la revendication 2 ou 3, caractérisé en ce que les extrémités des lames de coupe (20, 20', 120, 120') éloignées de la coulisse (18, 118) entrent en prise dans des rainures de guidage (19, 19', 119, 119'), qui sont disposées de façon à courir, sur le côté de la fente (15, 115') destinée à loger la ceinture, éloigné du guidage de la coulisse, perpendiculairement à sa direction longitudinale.

5. Système de ceinture de sécurité selon l'une des revendications 2 à 4, caractérisé en ce que chaque dispositif de coupe (12, 112) est constitué d'une partie supérieure (14, 114), comportant la coulisse (18, 18', 118, 118') logée de façon à pouvoir se déplacer dans un guidage, et d'une partie inférieure (13, 13' ) assemblée à la partie supérieure, la fente (15, 115) destinée à loger la ceinture s'étendant, avec le tronçon de serrage (34, 134), entre la partie supérieure et la partie inférieure.

6. Système de ceinture de sécurité selon la revendication 5, caractérisé en ce que la partie supérieure et la partie inférieure (13, 14, 113, 114) sont configurées comme des pièces en matière plastique moulées par injection, essentiellement égales, qui, en position de montage, sont assemblées à demeure l'une à l'autre, par exemple par vissage, en formant la fente (15, 115) destinée à loger la ceinture.

7. Système de ceinture de sécurité selon la revendication 6, caractérisé en ce que la partie inférieure (13) est reliée à la partie supérieure (14) par l'intermédiaire d'une charnière rapportée par injection (30).

8. Système de ceinture de sécurité selon l'une des revendications 2 à 7, caractérisé en ce que le dispositif de coupe (12, 112) comporte un couvercle de sécurité (25, 125), qui recouvre la coulisse (18, 118) dans la zone du guidage de coulisse (16, 116) courant transversalement à la direction longitudinale de la fente (15, 115') destinée à loger la ceinture, et est maintenue à l'aide d'un blocage (28, 28', 128, 128') agissant comme un clip, dans sa position de sécurité, mais toutefois, si elle surmonte le blocage, peut être pivotée dans une position qui libère la coulisse.

9. Système de ceinture de sécurité selon la revendication 8, caractérisé en ce que le couvercle de sécurité (25) est pourvu d'une came d'arrêt (27), qui, en position de sécurité, bloque la coulisse (18, 18') en empêchant, par une liaison avec correspondance de forme, une manoeuvre de coupe, mais qui la libère en position de déverrouillage.

10. Système de ceinture de sécurité selon la revendication 9, caractérisé en ce que le couvercle de sécurité (25) est articulé au dispositif de coupe (12), de façon à pouvoir pivoter autour d'un axe (26) parallèle à la fente (15) destinée à loger la courroie et courant dans la direction longitudinale de la courroie.

11. Système de ceinture de sécurité selon la revendication 9 ou 10, caractérisé en ce que le blocage à effet de clip est affecté à la came d'arrêt (27) sous forme de billes d'encliquetage (28, 28') à ressort, qui dépassent latéralement au delà de la came d'arrêt et entrent en prise, en position de blocage, dans des crans aménagés dans la zone de guidage de la coulisse.

12. Système de ceinture de sécurité selon la revendication 8, caractérisé en ce que le couvercle de sécurité (125) est articulé à l'enveloppe du dispositif de coupe (112), de façon à pouvoir pivoter autour d'un axe (126) courant perpendiculairement à la fente (115) destinée à loger la ceinture, et parallèle au sens longitudinale de la ceinture.

13. Système de ceinture de sécurité selon la revendication 11, caractérisé en ce que le couvercle de sécurité (125) se trouve, dans la position de sécurité recouvrant le guidage de coulisse (116), avec une arête frontale, agissant comme butée pour la coulisse (118), dans le trajet de déplacement de la coulisse munie des lames de coupe (120, 120').
